# EUROPEAN PATENT APPLICATION

(11) **EP 4 265 956 A1**
(43) Date of publication of application: **25.10.2023**
(21) Application number: 23168644.5
(22) Date of filing: 19.04.2023
(51) Int. Cl.: F17C 1/00, F17C 5/06, F17C 3/08

(54) **A PORTABLE REFUELLING DEVICE**

(30) Priority: 19.04.2022 GB 202205728
(71) Applicant: JCB Research, Uttoxeter, Staffordshire ST14 5JP (GB)
(72) Inventor: WOMERSLEY, Robert, Uttoxeter, ST14 5JP (GB); CLARKE, Harry, Uttoxeter, ST14 5JP (GB); RICHARDS, Mark, Uttoxeter, ST14 5JP (GB); BEAMISH, Thomas, Uttoxeter, ST14 5JP (GB); JOHNSON, Noel, Uttoxeter, ST14 5JP (GB); OWEN, Chris, Uttoxeter, ST14 5JP (GB)
(74) Representative: Foot, Paul Matthew James

(57) **Abstract**

The present invention provides a portable refueller (10) for storing a quantity of gaseous fuel, optionally hydrogen, for refuelling an end-user vehicle, comprising: a plurality of storage tanks (16a-16g), each storage tank comprising at least one cylinder which is horizontally arranged within an enclosure (18), wherein the enclosure is configured to be carried by a vehicle (12), and, a refuelling nozzle for discharging a quantity of the gaseous fuel to the end-user vehicle during refuelling.

## Description

### FIELD

The present invention relates to a portable storage device for a gaseous fuel. In particular, the invention relates to a portable storage device for storing and distributing hydrogen to a point of use.

### BACKGROUND

Off-highway vehicles or working machines are for example those used in construction industries and agriculture (e.g. backhoe loaders, slew excavators, telescopic handlers, forklifts, skid-steer loaders, tractors, etc.) typically have a body supported by a ground-engaging propulsion structure such as front and rear wheels, or a pair of endless tracks. To propel the working machine, a drive arrangement, including for example a transmission and a prime mover such as an internal combustion engine, provides motive power to the ground-engaging propulsion structure.

Conventional working machines typically have a diesel prime mover but there is an increasing need to move towards more environmentally friendly alternatives, such as hydrogen. However, the use of hydrogen requires a separate infrastructure to provide fuel at the point of use such that off-highway machines can easily refuel with minimum disruption to their working schedule.

Existing solutions include storage tanks which are provided at a particular site and include enough fuel to refuel numerous machines multiple times.

The present teachings seek to overcome, or at least mitigate the problems of the prior art.

### SUMMARY

The present invention provides a portable refuelling storage device according to the appended claims.

Disclosed herein is a portable refuelling storage device for storing a quantity of gaseous fuel for refuelling an end user vehicle. The storage device may comprise: a plurality of storage tanks, each storage tank comprising an elongate cylinder which is horizontally arranged within an enclosure.

The enclosure may be configured to be carried by a vehicle. By configured to be carried by a vehicle, it is meant that the enclosure may be configured to be loaded and unloaded on to the vehicle and to be used for refuelling whilst on the vehicle at a point of use. The vehicle may be an off-highway vehicle such as a tractor, or a trailer configured to be towed by an off-highway vehicle. The vehicle may comprise a platform, such as a flat bed, on to which the storage device may be loaded.

The end-user vehicle may be a work-machine. The work-machine may comprise an off-highway work-machine. The work-machine may comprise a backhoe loader, slew excavator, telescopic handler, forklift, skid-steer loader, tractor, etc. The work-machine may be the transporting vehicle.

The enclosure may comprises a pair of sleeves for receiving a pair forklift forks for loading the storage device on to the vehicle. The sleeves may extend side-to-side across the storage device and may be accessible from either side. The sleeve may extend transverse to the longitudinal direction of the storage tanks.

A wall of the enclosure may comprise a plurality of user access panels for providing access to one or more control devices or display devices. A first user access panel may conceal an electrical interface enclosure. A second access panel may comprise a gas interface enclosure. The access panels may be hinged panels. The hinges may be located towards and edge of the enclosure. The access panels may be provided adjacent to one another and may be at a common height. The enclosure may further comprise one or more other secondary access panels. A mechanical master isolation valve which isolates an outlet line if the storage device.

The electrical interface enclosure may be internally intrinsically sealed with respect to the storage tanks and gas interface enclosure. The internally intrinsically sealed enclosure may isolate the electrical equipment from any gas containing equipment. The electrical equipment may comprise one or more display devices, one or more controllers, one or more power sources, such as a battery, for providing power to one or move valves, display devices, sensors, transducers or controllers.

The enclosure (which may be referred to as main enclosure) may comprise the storage tanks. The storage tanks may comprise a first plurality of storage tanks and a second plurality of storage tanks. The first plurality of storage tanks may be located below the second plurality of storage tanks. The first and second storage plurality of storage tanks may be collectively located in separate compartments or bays of the enclosure. Thus, the enclosure may comprise a first bay for housing a first plurality of storage tanks and a second bay for housing a second plurality of storage tanks, the second bay being above the first bay.

The enclosure may comprise a first part and a second part. The first part may comprise a base which receives the first plurality of storage tanks. The second part may comprise a mid-section or an upper section which encloses the second plurality of storage tanks. The enclosure may comprise a plurality of structural members arranged to enclose the plurality of storage tanks. The first part and second part may be separately constructed discrete sections which are subsequently assembled to provide the enclosure. The first and second parts may be configured to be sequentially stacked and attached to one another.

The structural framework may comprise externally cladding to enclose the storage tanks. An upper surface of the enclosure may include a plurality of vents for venting gas from the storage tanks during a leak.

The discrete sections may comprise a base and an upper section. The base may be configured to receive the first plurality of storage tanks. The upper section may be configured to enclose the second plurality of storage tanks.

Each tank may comprise a tank valve for discharging the respective tank. The tank valves may be electrically operated. The tank valves may comprise an electrical solenoid. The tank valves may be independently controlled. The independent control may allow each of the tank valves to be selectively charged or discharged.

Each storage tank may comprise corresponding first and second ends. The storage tanks may comprise elongate cylinders. The tank valves may be mounted to the first ends of the storage tanks. The tank valves may be integrally mounted to the first ends of the storage tanks. The tank valves may be mounted to a threaded boss of the tank, for example.

The tank valves may be located behind a wall which comprises the access panels. A portion of the wall which comprises the access panels may be separately mounted to the main enclosure such that access to the tank valves and/or any fluid pipework associated with the charging and discharging of the storage tanks can be accessed once located within the enclosure. The wall portion which is separately mounted may be repeatably detachable. The wall portion which is separately mounted may comprise a user interface panel. Hence, removal of a user interface panel located within the access panels may provide access to the tank valves and any associated pipework.

The plurality of tanks may be arranged in four banks. Each of the four banks may be configured to be individually controlled for discharge. Each of the four banks may comprise a two or more storage tanks.

The storage device may comprise an electronic control unit configured to control the charging and discharging of the plurality of storage tanks. The tank valves may comprise at least one sensor for measuring a tank pressure and/or tank temperature. The tank valves may comprise at least one particulate filter.

The plurality of storage tanks may comprise a temperature responsive discharge valve configured to vent the gaseous fuel when the temperature rises to beyond a predetermined value. Temperature responsive discharge valves may be provided at the first and second ends of the respective storage tank. The temperature responsive discharge valves may be mounted directly to each respective tank. The tank valve may comprise the temperature responsive discharge valves.

Also disclosed herein is a vehicle comprising a portable refueller comprising a storage device according to the present disclosure. The vehicle may be an off-highway vehicle, optionally, a tractor. The vehicle may be configured to travel on-highway.

The vehicle may comprise an operator cab. The portable refueller may have a maximum height approximately in line with the height of the operator cab.

The end user vehicle may have a refuel capacity of between 4kg and 16kg and at a pressure of between 300 bar and 400 bar, preferrable 350 bar. In some embodiments, the refill pressure may be between 350 bar and 600 bar.

The weight of the refueller may be between 3000kg and 4000kg. In preferred embodiments, the weight may be between 3300kg and 3700kg, optionally approximately 3500kg.

The height of the refueller may be between 1000mm and 1500mm, optionally 1200mm and 1400mm. The width of the refueller may be between 2000mm and 2600mm, optionally between 2200mm and 2400mm. The length of the refueller may be between 2400mm and 3000mm, optionally between 2600mm and 2800mm.

Also disclosed herein is a method of refuelling an end-user off-highway work-machine. The method may comprise: loading a portable refueller on to a transporting off-highway work-machine; locating the transporting work-machine at a refuelling location; and, refuelling the end-user work-machine at least once whilst the refueller remains on the transporting work-machine. The portable refueller may comprise any disclosed herein.

The method may further comprise relocating the transporting work-machine to an alternative location. The alternative location may comprise a second refuelling location for a second end-user machine. The method may further comprise refuelling the second end-user work-machine whilst the refueller remains of the transporting work-machine. The second location may be refilling location for refilling the refueller. Relocating the transporting work-machine may comprise off-highway and on-highway travel.

Also disclosed herein is a method of constructing a portable refuelling storage device. The portable refuelling storage device may comprise a plurality of storage tanks within an enclosure. The method may comprise: providing a base of the enclosure wherein the base is configured to receive a first plurality of storage tanks. Locating the first plurality of storage tanks on the base; locating a second plurality of storage tanks above the first plurality of storage tanks; and, providing an upper section of the enclosure to enclose the first and second plurality of tanks and connecting the upper section to the lower section. The method may further comprise: connecting one or more conduits and/or valves to each of the first and second pluralities of storage tanks.

The method may further comprise connecting of the one or more conduits and/or valves to each of the first plurality of storage tanks prior to installing the second plurality of storage tanks.

The method may further comprise providing a mid-section between the base and upper section. The mid-section may be provided prior to installing the second plurality of storage tanks. The second plurality of storage tanks may be carried by the mid-section.

The method may further comprise installing a front wall portion of the enclosure to conceal the one or more conduit and/or valves. The front wall portion may comprise an access panel to provide access to one or more controls for controlling the filling or dispensing of fuel from the storage device.

Also disclosed herein is a portable refueller for storing a quantity of gaseous fuel, optionally hydrogen, for refuelling an end-user vehicle, comprising: a plurality of storage tanks; a refuelling nozzle for discharging a quantity of the gaseous fuel to the end-user vehicle during refuelling; an inlet for receiving a flow of pressurised gaseous fuel for filling or refilling the storage tanks; and, a plurality of inlet fluid lines, each of inlet fluid lines connecting the inlet to one of plurality of storage tanks independently of one another, each fluid line comprising a valve operable to open when the pressure of a gas flow provided at the inlet matches the pressure within the respective storage tank.

The valve may be a passive valve. The passive valve may comprise a one-way valve (which may be referred to as a check valve) configured to allow a flow of gas from the inlet to the respective storage tank.

The plurality of inlet fluid lines may extend from a common connection point which connects each of the plurality of inlet fluid lines to a common inlet fluid line. The common connection point may comprise a manifold. The manifold may comprise the valves for each respective fluid line. That is, the check valves may be integrally formed within a body of the manifold.

Providing a pressure responsive valve in the fluid line which receives the flow of gas for filling each storage tank allows the tanks to be at different pressures prior to filling. This is particularly advantageous in a refueller which is operated according to a cascade scheme where the storage tanks are used for refuelling in accordance with the pressure of the fuel tank being re-fuelled.

The refueller may comprise a plurality of outlet fluid lines connecting each of the storage tanks to the refuelling nozzle. Each of the outlet fluid lines may be isolated from the other outlet fluid lines to such that each storage tank can be connected to the outlet without a flow of gas between storage tanks. Each of the outlet fluid lines may comprise a one-way valve to isolate each storage tank from the other storage tanks.

The outlet fluid lines may be extend to a common connection point which connects each of the plurality of outlet fluid lines to a common outlet fluid line which extends to the refuelling nozzle. The common connection point may comprise an outlet manifold. The outlet manifold may comprise the one-way valves for each respective outlet fluid line. That is, the one-way valves may be integrally formed within a body of the outlet manifold.

The inlet manifold and outlet manifold may be collocated within the portable storage device. The inlet manifold and outlet manifold may be provided within a common manifold block.

Each tank may comprise a tank valve for discharging the respective tank. The tank valves may be electrically operated. The tank valves may comprise an electrical solenoid. The tank valves may be independently controlled. The independent control may allow each of the tank valves to be selectively charged or discharged.

Each storage tank may comprise corresponding first and second ends. The storage tanks may comprise elongate cylinders. The tank valves may be mounted to the first ends of the storage tanks. The tank valves may be integrally mounted to the first ends of the storage tanks. The tank valves may be mounted to a threaded boss of the tank, for example.

The tank valves may be located behind a wall which comprises the access panels. A portion of the wall which comprises the access panels may be separately mounted to the main enclosure such that access to the tank valves and/or any fluid pipework associated with the charging and discharging of the storage tanks, such as the inlet or outlet manifolds, can be accessed once located within the enclosure. The wall portion which is separately mounted may be repeatably detachable. The wall portion which is separately mounted may comprise a user interface panel. Hence, removal of a user interface panel located within the access panels may provide access to the tank valves and any associated pipework.

The storage device may comprise an electronic control unit configured to control the charging and discharging of the plurality of storage tanks. The tank valves may comprise at least one sensor for measuring a tank pressure and/or tank temperature. The tank valves may comprise at least one particulate filter.

The plurality of storage tanks may comprise a temperature responsive discharge valve configured to vent the gaseous fuel when the temperature rises to beyond a predetermined value. Temperature responsive discharge valves may be provided at the first and second ends of the respective storage tank. The temperature responsive discharge valves may be mounted directly to each respective tank. The tank valve may comprise the temperature responsive discharge valves.

It will be appreciated that any of the features described in associate with any aspect of the disclosure may be applicable to any other example, embodiment, or aspect of the disclosure except where mutually exclusive.

### BRIEF DESCRIPTION OF THE DRAWINGS

Embodiments are now disclosed by way of example only with reference to the drawings, in which:
Figure 1 shows a vehicle comprising a portable refueller mounted thereon;
Figure 2 shows the portable refueller of shown in Figure 1 dismounted from the vehicle;
Figure 3 shows the internal structure of the portable refueller of Figure 2;
Figure 4 shows portable refueller including a plurality of storage tanks;
Figure 5 shows an external view of the refueller and the user interface panels;
Figure 6 shows a plurality of storage tanks;
Figure 7 shows a schematic layout of the fluid system of the refueller;
Figure 8 shows an alternative refueller layout; and,
Figure 9 shows a schematic representation of a controller.

### DETAILED DESCRIPTION OF EMBODIMENT(S)

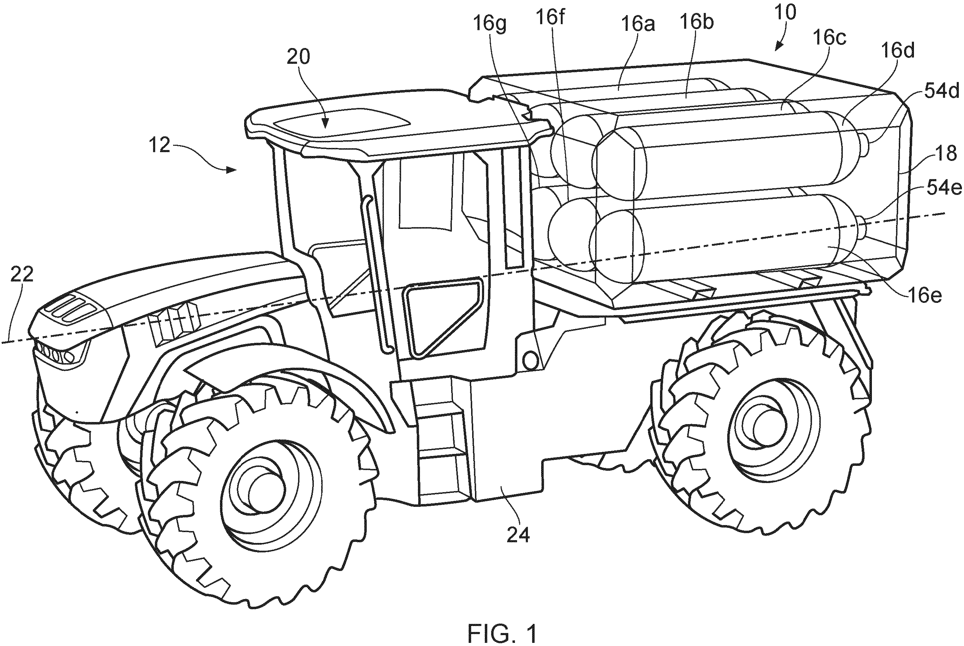

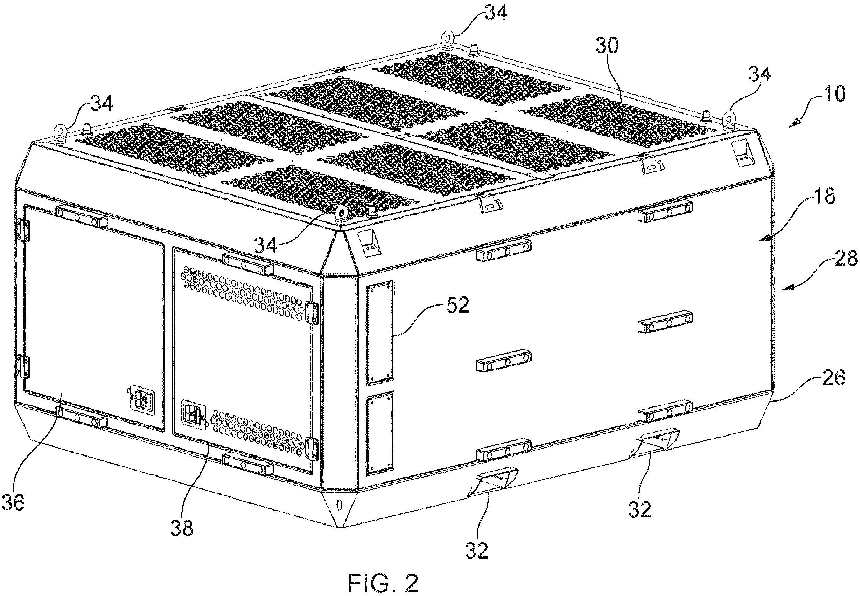

Referring firstly to Figures 1 and 2, there is shown a portable refuelling device 10 located on a transportation vehicle 12. The transportation vehicle 12 may be an off-highway vehicle, such as a tractor, which is suited to delivering the portable refuelling device 10 to a place of use, i.e. a refuelling location. The portable refuelling device 10 is sized and shaped to be received on a flatbed carrying platform of the vehicle 12 which may incorporate one more locating features which engage with the portable refuelling device 10 to prevent movement during transportation. It will be appreciated that, although a flatbed platform is provided in the example shown in Figure 1, this is not a limitation and other carrying platforms and/or attachments are possible.

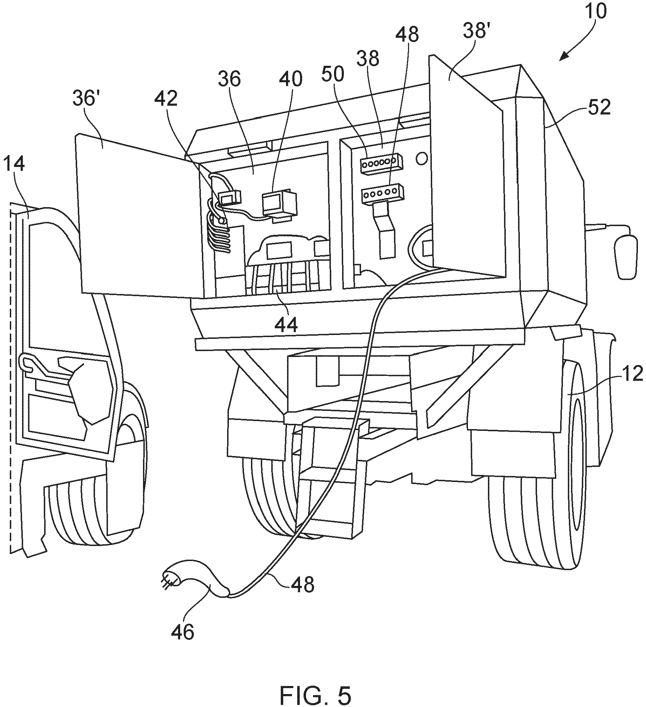

The use of an off-highway vehicle 12 for transportation allows the refuelling device 10 to be provided at a point of use of the end user vehicle 14 (shown in Figure 5). This can be particularly advantageous as it minimises the distance to be travelled by the end user vehicle 14 when refuelling is required. For example, when the end user vehicle 14 is an off-highway work-machine, it may be time consuming and energy inefficient to travel from a point of work to a refueller location. This is particularly so in large construction or agricultural settings where the separation between a central base or some other central location may be up to 30 minutes travel for more remotely located work-machines. Hence, providing a refueller on a vehicle 12 which can be deployed to a work-machine 10 in accordance with a predetermined schedule or on demand, has the potential to save significant resource, both in terms of time and fuel. Additionally, or alternatively, the use of a portable refueller 10 allows an optimum refuelling location to be provided flexibly, thereby allowing an improved refuelling strategy for work-machines located in work locations which may vary during the course of a day or week, for example.

The portable refuelling device 10 (which may be simply referred to as refueller) is for refuelling of a gaseous fuel such as hydrogen, but other gas based fuels may be used.

The portable refuelling device 10 may comprises a plurality of storage tanks 16a-h comprised within an enclosure 18. The tanks 16a-h may be arranged horizontally such that the overall height of the refueller 10 is kept to a minimum whilst maximising the storage capacity. In the example shown, the reduced height may allow the upper surface of the enclosure 18 to be provided at a level similar to the operator cab 20 height, thereby reducing the likelihood of impact from overhead objects. Further, providing the tanks 16ah horizontally allows the centre of gravity to be as low as possible thereby aiding the stability of the transporting vehicle 12, which may be particularly useful in an off-highway scenario.

The storage tanks 16a-h may be elongate cylinders as known in the art. In the arrangement shown, the longitudinal axes of the tanks 16a-h are parallel to one another and to the principal axis 22 of the vehicle chassis 24, although this is not a limitation and the longitudinal axes may traverse the vehicle chassis 24, that is, extended side-to-side in some embodiments.

The enclosure 18 may comprise a base 26, an upper section 28, and an optional mid-section 30. The base 26 provides a structural element which is configured to support the mid-section/upper section and provide a load bearing surface on which refuelling device 10 resides, in use.

The refuelling device 10 is configured to be portable in that it is possible to be loaded on to the transporting vehicle 12, travel to a refuelling location, refuel an end-user work-machine 14 at least once whilst the refueller remains on the transporting vehicle 12 and then travel to an alternative location. The alternative location may be a second refuelling location for a second end-user machine for example, or a refilling location at which the storage tanks can be refilled. The transporting vehicle 12 may comprise a vehicle which is configured to travel on and/or off-highway and may be, as per Figure 1, a tractor.

In order to allow the refueller 10 to be loaded and unloaded from the transporting vehicle 12, the base 26 may comprise a pair of sleeves 32 which are sized and spaced to receive the forks of a forklift truck or telehandler, for example. As such the refueller 10 can be lifted and manoeuvred relatively easily for loading and unloading from the back of the vehicle 12.

Additionally, or alternatively, the enclosure 18 may comprise one or more other lifting features such as the eyelets 34 located at each corner and configured to enable the device 10 to be lifted by a suitable crane or other lifting device using cables or straps.

The upper section 30 of the enclosure 18 provides a lid configured to mechanically enclose the tanks 16a-h to prevent the ingress of foreign objects such as tree branches, stones, earth, tools, people or other hazards which may be present at the point of use. Although generally enclosed, it can be seen that the upper section 30 also includes vented panels to help prevent the entrapment of gas within the enclosure which may be present due to a leak or purposeful discharge during decommissioning or some other event.

The mid-section 28 comprises sidewalls of the enclosure 18 which extend between the upper 30 and lower 26 sections.

The upper and lower edges of the enclosure 18 may comprise chamfered regions in which the joint between any of the walls and lid, any of the walls and base, or any two walls is provided with a short intermediate wall section to provide a chamfered edge. The provision of a chamfer may improve the structural rigidity of the device and/or may be provided for aesthetic reasons.

The refuelling device 10 may comprise an electrical interface 36 and a gas interface 38 with which a user may engage to control or receive information relating to the status or operating state of the refueller 10. The electrical 36 and gas 38 user interfaces may be accessed through respective access panels 36', 38' which are provided in a side wall of the of the enclosure 18, as shown in Figure 5. Hence, the access panels 36', 38' may be provided to allow a user to access any controls and/or displays which are provided on the interfaces and which may be needed to operate the refueller and/or determine its current operating status.

The electrical interface 36 may form part of an electrical enclosure which is provided to electrically isolate the electrical systems from the gas systems of the refueller 10, thereby providing an intrinsically safe system. As such, an electrical interface enclosure may be partitioned by one or more bulkheads, which in the present embodiment is provided by the interface panel, or other walls, with any cables passing through suitably gas tight fittings into the regions in which the gas systems are provided. The electrical interface enclosure may comprise one or more display devices 40, controllers 42 and/or power sources 44 required to provide the necessary electrical control. The gas systems may include the storage tanks and any associated pipework, valves or sensors or the like.

The gas interface may comprise a refuelling device, such as a nozzle 46, which is provided on a suitable hose (shown in Figure 5), and which is connectable to the end-user vehicle 14 which is to be refuelled; one or more inlets (shown) which are configured to receive a refill nozzle from an appropriate source of fuel such as a mains tank or a refuelling tanker; one or more display devices 48 for providing information in relation to the individual storage tanks 16a-h such as a fill levels or tank pressures; and, one or more controls 50 which are required for charging and discharging of the storage tanks 16a-h. The gas interface 38 may also comprise one or more valves for isolating the output line of the tanks during on-road transportation. In some embodiments, the isolating valve may be provided behind a separate access panel 52, as may other service related valves which are not generally required by a refuelling operator.

The particular arrangement of the controls and display devices of the electrical and gas enclosures can be any suitable and are not limited to this disclosure. Hence, further details are not provided.

The access panels 36', 38' may be provided by hinged doors which include suitable latching or locking mechanisms to provide protection and convenient suitably authorised access. In Figure 2, the gas interface is distinguishable by having a plurality of vent apertures located towards the top and bottom of the door. The doors are both shown as being hinged peripherally so that both open from the inner edge located towards the mid-region of the side wall to increase user convenience but this is not a limitation.

As shown in Figure 5, the doors may be located at the rear of the vehicle when mounted for convenience, but this is not a limitation and access panels 36', 38' may be provided on a side surface where desired.

As noted above, in addition to the electrical interface access panel 36' and the gas interface access panel 38', the enclosure 18 may comprise one or more additional access panels 52 to provide access to other elements. As an example of this, there is shown an auxiliary panel on the side adjacent the main access panels which houses an isolation valve for closing off the output from the tanks thereby ensuring no escape of gas is possible should one of the tank valves fail.

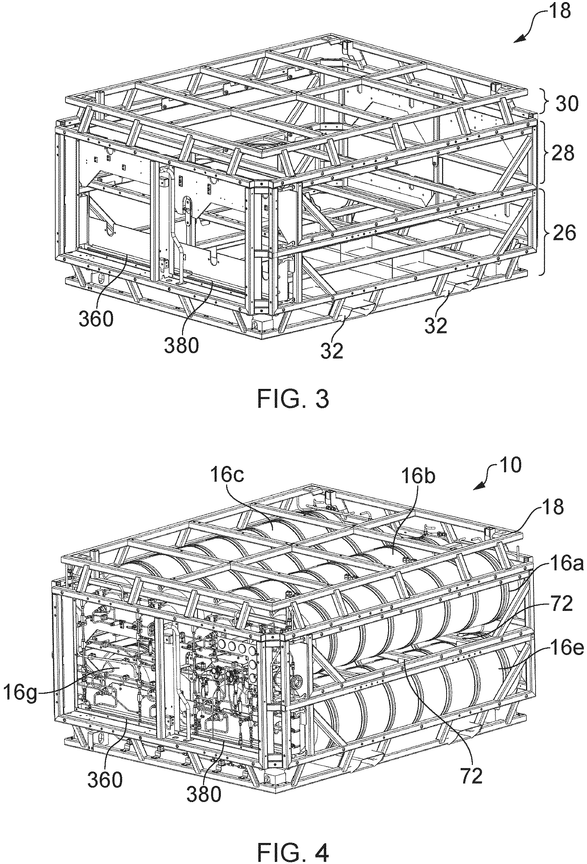

Figures 3 and 4 show the internal structural framework of the enclosure 18 and the storage tanks 16a-h located therein. The tanks 16a-h may be arranged in a parallel horizontal arrangement and may comprise two rows of four cylinders with one stacked above the other. However, the number of tanks, both in total and per each row, may be varied and the described example should not be taken to be a limitation of the present disclosure. The rows of the cylinders may be provided in banks which are movable as a single unit.

The structural framework may comprise a plurality of sections which correspond to the different sections are separately constructed and subsequently attached to one another during assembly of the storage device. A first section may comprise a lower section or base 26 and provide the contacting surface on which the device resides in use. The base 26 may comprise a lower portion which provides the contacting surface and one or more internal members onto which the first plurality of storage tanks 16e-h is loaded and supported. The base 26 may also include the fork sleeves 32 which extend transversely (relative to the direction of the storage tanks) across the device 10 side-to-side. The sleeves 32 are shown as being full tubular sleeves which extend fully across the width of the enclosure so as to allow lifting from either side, but this is not a limitation.

Although not shown, it will be appreciated that the base 26 may comprise one more attachment features or cradles for receiving and locating the lower storage tanks.

The base 26 may additionally comprise one or more side walls which extend upwardly from the lower section of the base 26. The side walls define the main enclosure in which the first plurality of storage tanks 16e-h are located.

An upper section 30 of the structural framework comprises the supporting structure of the lid of the enclosure 18 and may include one more side walls which extend downwardly to meet the side walls of the base 26. These may be attached to one another using suitable fixings such as bolted connections or by welding for example.

It will be appreciated that the sidewalls of the enclosure 18 may be provided separately from the base 26 and/or upper section 30 and may comprise an independent mid-section 28, which is shown in Figure 3 and described further below.

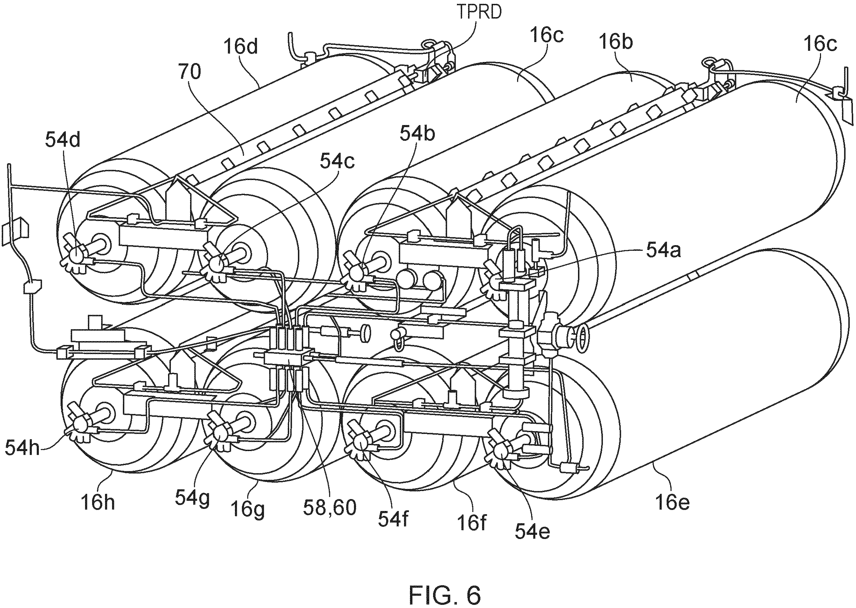

The storage tanks 16a-h each comprise a tank valve 54a-h (best seen in Figure 6) for charging and discharging purposes which may be provided at the same respective end of the tanks 16a-h. The side wall, or a portion of the side wall, which faces the valves 54a-h may be advantageously attachable once the storage tanks 16a-h have been loaded into the main enclosure. This allows some or all of the connections to each of the respective tank valves (and any other parts) to be made prior to that side wall (or a portion thereof) being attached. In the example described herein, access to the tank valves 54a-h and associated pipework etc is provided by removing the gas and/or electrical interface panels. Doing so provides relatively easy access for maintenance purposes.

The (internal) sidewall which is adjacent to the valves and pipework may be provided with one or more webs, plates or flanges to allow the mounting of the any control devices or display devices. There may also be appropriately sized apertures 360, 380 to provide access to the tanks 16a-h and internal pipework during assembly once the interface panels have been removed as shown in Figure 4.

It will be appreciated that the internal structural framework, as well as providing an enclosure of the storage tanks 16a-h also provides a scaffold onto which external cladding can be attached, including the aforementioned venting ducts provided on an upper surface.

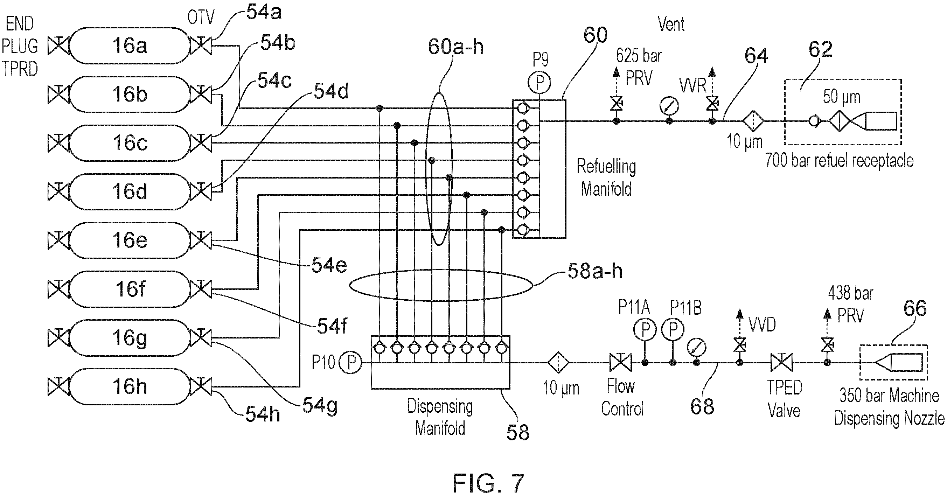

In Figure 6, there is shown an example of a plurality of storage tanks 16a-h with the interconnecting pipework and tank valves 54a-h to enable charging and discharging of the storage tanks 16a-h. Figure 7 shows a schematic layout for the arrangement of Figure 6.

As can best be seen in Figure 7, the arrangement may comprise a plurality of storage tanks 16a-h, a control valve or tank valve 54a-h, for each storage tank 16a-h, a refilling manifold 60 and a dispensing (or refuelling) manifold 58. The manifolds 58, 60 may be referred to as common connection points.

Respective fluid lines 60a-h, 58a-h connect each of the tank valves 54a-hand the manifolds in parallel such that each tank can be charged (refilled) and discharged (to refuel a vehicle) simultaneously upon control of the valves. Also shown is a charging inlet 62 which connects to the charging manifold 60 via an inlet fluid line 64, and a discharging outlet 66 which is connected to the discharge manifold 58 via an outlet fluid line 68. Each of the inlet fluid line 64 and outlet fluid line 68 may comprise various gauges and valves to enable to the system to be discharged during a pressure surge or decommissioning. The outlet may comprise primary and secondary pressure gauges to provide redundancy.

Each of the inlet fluid lines 60a-h may comprise a one way valve (which may be referred to as a check valve) which is shown as being integrated with the manifolds 60 in the described example, although this is not a limitation. The check valves operate as pressure responsive valves through which, during the filling of the tanks, the flow from the inlet 62 is only permitted to each tank when the inlet pressure is equal to or greater than the existing tank pressure 16a-h associated with the check-valve. Hence, in the case where the existing tank pressure varies between tanks to provide a "staircase" or "cascade" of distributed pressures due to operating a cascade filling (which is likely to be the case), the inlet pressure can be increased from below the lowest tank pressure with none of the check valves opening due to the tank pressure being greater. As the inlet pressure is increased, the check valves will sequentially open as the respective tank pressures are overcome, thereby equalising the pressures across the tanks to flatten the cascaded pressures. It will be appreciated that the outlet line is closed during charging.

The check valves in the discharge manifold 58 are arranged to allow a flow from the tanks 16a-h to the outlet 66. As each tank line has an independent check valve, it is not possible to get a back flow from a discharging tank to another tank at a lower pressure. It will be appreciated that the outlet check valves and inlet check valves operate independently of one another and it is not required to include both in working system.

Also shown in Figure 7 is a master isolation valve, TPED, which isolates the discharge line thereby preventing any accidental discharge should any of the tank valves fail.

The tank valves 54a-h which are operable to charge or discharge the tanks 16a-h may be any suitable valves controllable either hydraulically or electrically. In the example shown, the valves 54a-h are on-tank valves which are mounted directly to the tank outlet opening, for example, by a threaded boss provided on the tank. Each of the tank valves 54a-h may be operated independently of the other tank valves 54a-h. The tank valves 54a-h may be electrical operated and, as such, include an electrical solenoid for example. The tank valves 54a-h may be configured to be normally closed and switchable to be fully open.

In addition to providing the basic switching operation, the tank valves 54a-h may also comprise one or more additional functions. In some embodiments, the tank valves 54a-h may comprise one or more sensors to monitor the status of the tanks. For example, each of the tank valves 54a-h may comprise one or more from the group comprising a pressure sensor, a temperature sensor, and a thermal pressure relief device, TPRD, which is configured to open if a locally sensed temperature exceeds a predetermined threshold. The tank valves 54a-h may also include a filter, for example.

Each tank 16a-h may comprise TPRD valves at each end of the tank to enable the temperature local to the front and the rear of each storage tank to be measured and the tank discharged if the pressure increases beyond the safe operating limit. The TPRDs may be tank mounted as shown in Figure 7, or, as shown in Figure 6, may be connected by one or more fluid lines 70 which extend from the front (operating end) of the tank and carried on a suitable support member to the rear of the tank. It can be seen from Figure 6 that each pair of tanks includes a single support member for the TPRD, but this is not a limitation.

To assemble the storage device 10 of the present disclosure, the base 26 may first be provided prior to locating the first plurality of storage tanks 16e-h therein using a suitable lifting device such as a hoist. The first plurality of storage tanks 16e-h may be attached together to provide a raft, or may be individually loaded.

Once the first plurality of tanks 16e-h are in place, select pipework, including the manifolds, valves, sensors or display devices (e.g. a gauge) may be attached. This is convenient as it allows any pipe work which is required to pass to the rear of the tanks (such as the TPRD lines), can be laid prior to locating the second plurality of tanks 16a-d.

Following the locating of the first plurality of tanks 16a-d (and optionally the connection of the various components), a mid-section 28 which provides support for the second plurality of tanks 16a-d may be positioned and attached to the base 26. As can be seen, the mid-section 26 comprises a plurality of members 72 which span the gap between the side members to provide the necessary support.

Once the mid-section 28 is in place, the second plurality of tanks 16a-d may be located and secured to it and the pipework associated with the second plurality of tanks 16a-d installed. Following the securing of the mid-section 28, the upper section 30 may be located and attached to the mid-section 28.

Once the main structural members of the enclosure are in place, the remaining lines, control devices and display devices together with the electrical interface enclosure bulkhead/panel and control panels, may be installed, prior to the external cladding and panel doors being mounted. Where the electrical interface comprises the bulkhead, it will be appreciated that the electrical components will be installed following the installation of the bulkhead.

It will be appreciated that the above assembly is an example and the order of the assembly/installation of the various parts may differ.

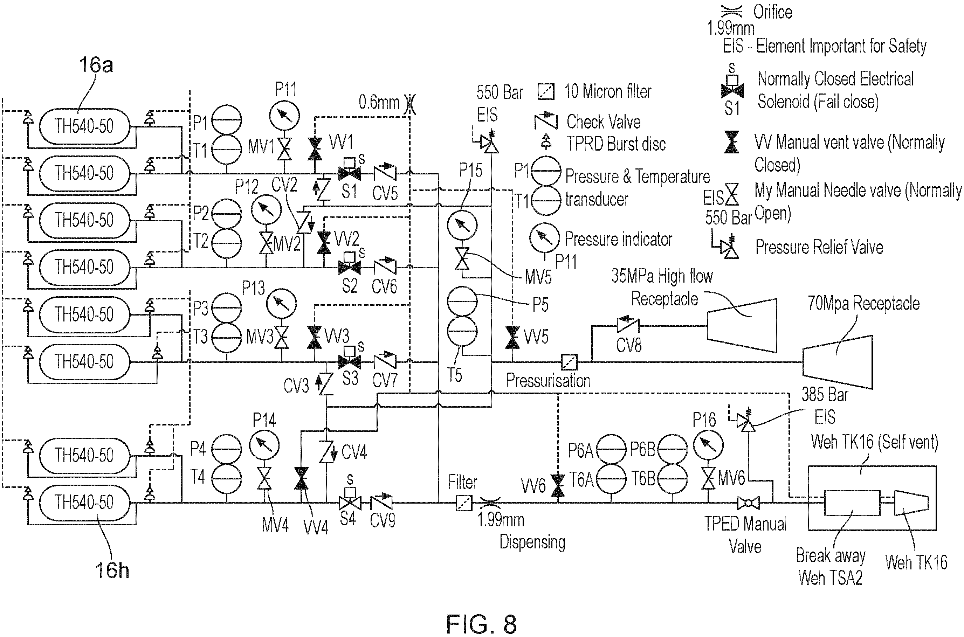

Figure 8 shows an alternative example of the storage refueller fluid layout which does not include the manifold connections 58, 60 or the tank valves 54a-h with the integrated sensors or filters. Hence, there is shown separate check valves for each of the charging and discharging tank lines and separate pressure and temperature sensors for the lines. Other aspects of the system shown in Figure 8 may be the same as those shown in Figure 7 and are not repeated here for brevity.

It will be appreciated that the arrangement of Figure 7 is preferable over that shown in Figure 8 as it reduces the number of connections and lines required.

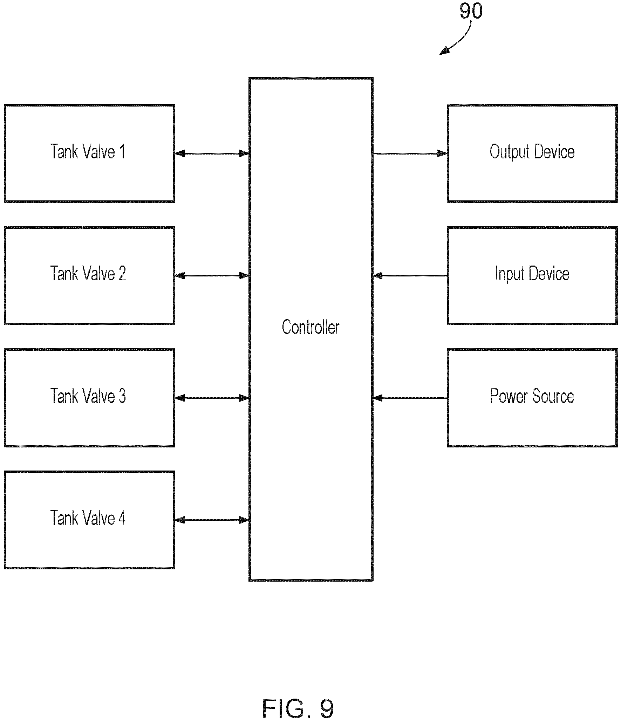

Figure 9 shows a control system 90 which may be utilised with the portable refueller 10. The control system may comprise a controller, a plurality of tank valves, an output device, an input device, and a power source. The controller may be an electronic control unit (which may be referred to as an electronic control module) and may comprise a microcontroller and/or a microprocessors, memory and various input and outport interfaces for connecting to the tank valves and/or any other sensors or actuators associated with the refueller's operation. The output device may comprise any device which provides a user with information relating to the refueller status or operating state and may comprise one or more of a display, one or more lights, or an audio output device. The input device may comprise any user input device such as one or more push buttons or touch screens. The tank valves may be any disclosed herein. The power source may be any suitable power source such as a battery or fuel cell. The operating voltage of the controller and electrical equipment, e.g. valves, sensors etc, may be 12v, 24v or 36v.

## Claims

1. A portable refueller for storing a quantity of gaseous fuel, optionally hydrogen, for refuelling an end-user vehicle, comprising:
a plurality of storage tanks, each storage tank comprising at least one cylinder which is horizontally arranged within an enclosure, wherein the enclosure is configured to be carried by a vehicle, and,
a refuelling nozzle for discharging a quantity of the gaseous fuel to the end-user vehicle during refuelling.

2. The refueller of claim 1, wherein the vehicle is an off-highway work-machine.

3. The refueller of claims 1 or 2, wherein enclosure comprises a pair of sleeves for receiving a pair fork lift forks for loading the storage device on to the vehicle.

4. The refueller of any preceding claim, wherein a wall of the enclosure comprises a plurality of user access panels for providing access to one or more controls or displays, the plurality of user access panels comprising a first user access panel which conceals an electrical interface, and a second access panel which conceals a gas interface.

5. The refueller of claim 4, wherein the electrical interface is intrinsically sealed with respect to the storage tanks and optionally comprises a power source and a controller for controlling discharging of the storage tanks during refuelling of an end-user vehicle.

6. The refueller of any preceding claim, wherein the enclosure comprises a first bay for housing a first plurality of storage tanks and a second bay for housing a second plurality of storage tanks, the second bay being above the first bay.

7. The refueller of any preceding claim, wherein the enclosure may comprise a plurality of separately constructed discrete sections which are subsequently assembled to provide the enclosure, wherein the discrete sections comprise a base comprising a first plurality of storage tanks, and an upper section comprising a second plurality of storage tanks located on the first plurality of storage tanks.

8. The refueller of any preceding claim, wherein each of the plurality of storage tanks comprises a tank valve for discharging the respective tank, wherein, optionally, the tank valves are electrically operated.

9. The refueller of claim 8, wherein the tank valves are independently controlled.

10. The refueller of claims 8 or 9, wherein each storage tank comprises corresponding first and second ends, wherein the tank valves are mounted to the respective first ends.

11. The refueller of claim 8 when dependent on claim 4, wherein the tank valves are located behind the wall which comprises the access panels.

12. The refueller of any preceding claim, wherein the plurality of tanks are arranged in four banks, wherein each of the four banks is configured to be individually controlled for discharge.

13. The refueller of any of claims 8 to 12, wherein the tank valves comprise at least one sensor for measuring a tank pressure and/or temperature and a thermal pressure relief device, TPRD, configured to vent the gaseous fuel when the temperature rises to beyond a predetermined value.

14. A vehicle comprising the portable refueller of any preceding claim, wherein the vehicle is an off-highway vehicle, optionally, a tractor.

15. The vehicle of claim 14, wherein the vehicle comprises an operator cab, wherein the portable storage device has a maximum height approximately in line with the height of the operator cab.
